# FASCICULE DE BREVET EUROPEEN

(11) **EP 0 389 363 B1**
(45) Date de publication et mention de la délivrance du brevet: **26.05.1993**
(21) Numéro de dépôt: 90400766.3
(22) Date de dépôt: 20.03.1990
(51) Int. Cl.: B60G 21/055, B60G 7/02

(54) **Train arrière d'un véhicule automobile**
Kraftfahrzeughinterradsatz
Motor vehicle rear wheel set

(30) Priorité: 22.03.1989 FR 8903780
(43) Date de publication de la demande: 26.09.1990
(73) Titulaire: AUTOMOBILES PEUGEOT, 75116 Paris (FR); AUTOMOBILES CITROEN, 92200 Neuilly-sur-Seine (FR)
(72) Inventeur: Galtier, Lucien, F-91390 Morsang sur Orge (FR); Barthelemy, André, F-78470 Saint-Remy-les Chevreuse (FR)
(74) Mandataire: Durand, Yves Armand Louis

(56) Documents cités:
- EP-A- 0 193 847
- DE-A- 2 406 433
- DE-A- 3 441 560
- DE-A- 3 613 123
- DE-A- 3 707 162
- FR-A- 2 407 399
- FR-A- 2 520 072
- GB-A- 2 048 795
- US-A- 4 458 917
- ATZ AUTOMOBILTECHNISCHE ZEITSCHRIFT. vol. 83, no. 1, janvier 1989, STUTTGART DE pages 3 - 7; schwäbisch gmünd: "die neue Hinterachs-Generation im VW Passat"
- J. REIMPELL: "Fahrwerktechnik: Radaufhängungen", 2ème èdition, 4ème partie: "Verbundlenkerachse", 1988, VOGEL, Würzburg, pages 189 à 204

## Description

La présente invention concerne un train arrière de véhicule automobile.

Plus précisément, un tel train arrière est du type à bras tirés reliés entre eux par une traverse déformable ayant une grande flexibilité en torsion et disposée au voisinage de l'axe des roues arrière du véhicule pour que ces dernières débattent avec une bonne flexibilité verticale et qu'en même temps la fonction anti-devers soit correctement assurée par la déformation de la traverse. Pour des raisons de maintien et de guidage latérale du train arrière dans ses mouvements de suspension, on utilise une barre dite Panhard disposée dans un plan horizontal proche de l'axe de rotation des roues arrière, comme décrit dans la publication de J. REIMPELL "Fahrwerktechnik : Radaufhängungen", 2ème édition, 4ème partie : "Verbundlenkerachse", 1988, VOGEL, Würzburg, pages 189 à 204, ou dans le document US-A-4 458 917.

Cependant, le point d'articulation de la barre Panhard au train arrière décrit un arc de cercle très important presque aussi grand que l'amplitude de la suspension. De ce fait, la flèche de cet arc est très importante, ce qui engendre sur le guidage en ligne droite du train arrière, des mouvements latéraux correspondants des roues par rapport à l'axe longitudinal de la caisse du véhicule, lesquels mouvements perturbent la tenue de route du véhicule et ont un effet désagréable ressenti par les passagers et le conducteur du véhicule, effet dû au battement latéral du véhicule sur une route bosselée. En d'autres termes, la barre Panhard n'assure le guidage latéral du train arrière que dans les limites de la flèche associée à son débattement dans le plan vertical.

Le document ATZ AUTOMOBILTECHNISCHE ZEITSCHRIFT, vol. 83, n° 1, janvier 1989, pages 3-7 ; "die neue Hinterachs-Generation im VW Passat", décrit un train arrière comprenant les caractéristiques énoncées dans le préambule de la revendication 1.

Cependant, ce document antérieur ne résout pas le problème que pose l'utilisation d'une barre Panhard exposé précédemment.

La présente invention a pour but de réduire considérablement le défaut susmentionné des trains arrière connus en proposant un train arrière de véhicule automobile caractérisé en ce qu'il comprend de plus, pour son guidage latéral, une barre dite Panhard reliée de façon articulée à ses deux extrémités respectivement à la caisse du véhicule et à l'un des deux bras tirés et en ce que les articulations élastiques des bras tirés permettent un coulissement sensiblement égal à la flèche maximale associée au débattement de la barre Panhard en relation avec le débattement de chaque roue.

Selon une caractéristique de l'invention, chaque articulation élastique précitée comprend une rotule, dont la partie sphérique peut coulisser axialement sur l'axe de pivotement du bras tiré correspondant par l'intermédiaire d'un palier anti-friction ; un bloc élastique, de préférence en élastomère, fixé entre la partie sphérique et la cage de rotule qui est solidaire de l'extrémité avant du bras tiré correspondant, ladite articulation étant compatible avec le roulis de la caisse du véhicule.

Selon une autre caractéristique de l'invention, chaque articulation élastique précitée est logée dans une partie formant chape de support de l'axe de pivotement du bras tiré correspondant et le bloc élastique précité a ses deux extrémités opposées en appui respectivement contre les deux faces internes des deux ailes de la partie formant chape.

Avantageusement, la barre Panhard est disposée sensiblement parallèlement à l'axe des roues arrière approximativement dans le même plan horizontal contenant celui-ci et à mi-distance entre l'axe des roues et les axes de pivotement des bras tirés.

La traverse précitée comprend une partie centrale à section transversale en Y, de très grande flexibilité en torsion, et disposée parallèlement à l'axe des roues approximativement dans le même plan horizontal contenant ce dernier.

Avantageusement, la partie centrale de la traverse est située en arrière de la barre Panhard.

De préférence, les extrémités de la traverse reliant la partie centrale aux fusées des roues arrière comprennent deux parties tubulaires rigides en torsion et en flexion.

L'invention sera mieux comprise, et d'autres buts, détails et avantages de celle-ci apparaîtront plus clairement au cours de la description explicative qui va suivre faite en référence aux dessins shématiques annexés donnés uniquement à titre d'exemple illustrant un mode de réalisation de l'invention, et dans lesquels:
La figure 1 est une vue de dessus d'un train arrière de véhicule automobile conforme à l'invention.
La figure 2 est une vue du train arrière suivant la flèche II de la figure 1.
La figure 3 est une vue en coupe suivant la ligne III-III de la figure 1 ; et
La figure 4 est une vue en coupe agrandie de la partie cerclée en IV de la figure 1, la demi-coupe inférieure montrant les limites de débattement du bras.

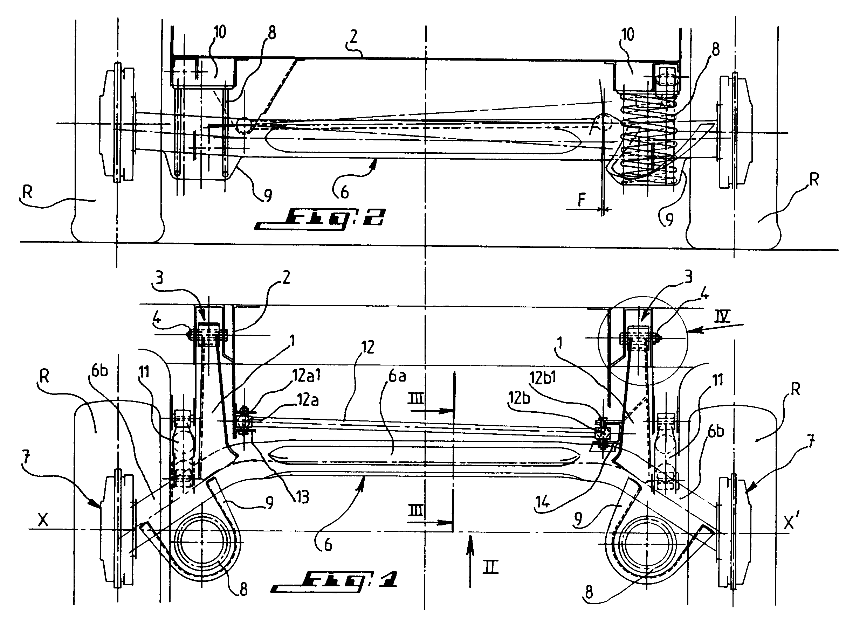

En se reportant aux figures, le train arrière pour véhicule automobile comprend deux bras tirés parallèles 1, dont chaque extrémité avant est montée pivotante par rapport à la caisse 2 du véhicule, par l'intermédiaire d'une articulation élastique 3, autour d'un axe 4 parallèle à l'axe X-X' des roues arrières R du véhicule et supporté par une partie formant chape 5 solidaire de la caisse 2. L'axe 4 est constitué dans le cas présent par un boulon traversant perpendiculairement les ailes 5a de la partie formant chape 5 et rigidement fixé à celles-ci.

Le train arrière comprend de plus une traverse déformable 6 aux extrémités de laquelle sont montées pivotantes les roues arrière R et qui est solidaire, par exemple par soudage, des extrémités arrière des deux bras tirés 1 pour les relier entre-eux. Plus précisément, la traverse 6 comprend une partie centrale 6a à section transversale en forme de Y, de très grande flexibilité en torsion, rigide en flexion et disposée parallèlement à l'axe X-X' des roues arrière R approximativement dans le même plan horizontal contenant l'axe X-X'. La traverse 6 comprend de plus deux parties tubulaires 6b situées en arrière de la partie centrale 6a en définissant avec cette dernière un angle obtu et rigides en torsion et en flexion. Les parties tubulaires 6b sont réalisées en une seule pièce avec la partie centrale 6a et portent à leurs extrémités les fusées 7 des roues arrière R. La traverse 6 permet un débattement des roues arrière R suivant une bonne flexibilité verticale et assure en même temps la fonction anti-devers du train par la déformation de la traverse 6. La traverse 6 assure également, par sa rigidité en flexion, aux roues arrière, leur tenue en carrossage et pince.

La suspension de train arrière est assurée par deux ressorts hélicoïdaux 8 sensiblement paralllèles et verticaux situés très près de l'axe X-X' des roues arrière R et chacun en appui sur une coupelle inférieure 9 solidaire de la traverse 6 et une coupelle supérieure 10 solidaire de la caisse 2 du véhicule. Deux amortisseurs 11, parallèles et inclinés vers l'avant du véhicule sont reliés de façon articulée à leurs deux extrémités respectivement à la traverse 6 et à la caisse 2 du véhicule.

Une barre transversale 12, du type Panhard, assurant le guidage latéral du train, est reliée de façon articulée à ses deux extrémités 12a, 12b, par deux articulations élastiques ou deux rotules, respectivement à la caisse 2 du véhicule et au bras tiré 1 situé à droite du véhicule. L'extrémité 12a est ainsi montée pivotante autour d'un axe 12a1 parallèle à l'axe longitudinal du véhicule et supporté par une chape 13 solidaire de la caisse 2. L'extrémité 12b de la barre 12 est également montée pivotante autour d'un axe 12b1 parallèle à l'axe longitudinal du véhicule et supporté par une partie formant chape 14 solidaire du bras tiré 1 à droite du véhicule et de la portion de liaison entre la partie centrale 6a et la partie tubulaire 6b de la traverse 6. La barre 12 est disposée parallèlement à l'axe X-X' des roues arrière, approximativement dans le même plan horizontal passant par l'axe X-X' et est à mi-distance entre l'axe X-X' et les axes de pivotement des bras tirés 1. De plus, la partie centrale 6a de la traverse 6 est située en arrière à proximité de la barre 12. En reliant ainsi la barre 12 d'une part à la caisse 2 et d'autre part à l'un des bras tirés 1 et à la portion de traverse correspondante de train, la barre 12 est d'une longueur maximale, de sorte que la valeur angulaire de déplacement dans un plan vertical de l'extrémité 12b de la barre 12 autour de son extrémité fixe 12a et correspondant aux courses de débattement maximum du train, se trouve réduite de moitié, ce qui engendre un arc de faible flèche F décrit par l'extrémité d'articulation 12b de la barre 12 reliée au train.

Dans la mesure où la barre 12 n'assure le guidage latéral du train que dans les limites de la flèche F associée au débattement de la barre dans un plan vertical, il est nécessaire que chaque articulation des bras tirés 1 soit libre en déplacement axial, c'est-à-dire dans le sens latéral du véhicule suivant l'axe X-X' des roues arrière.

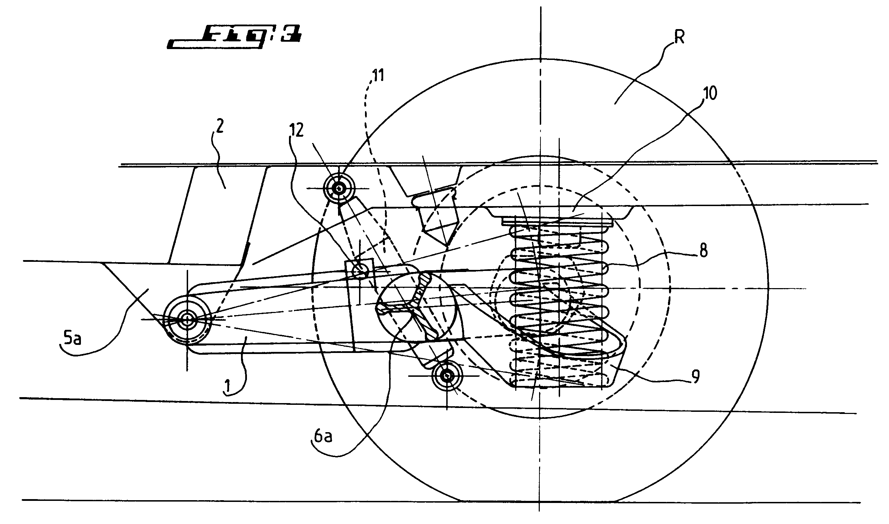

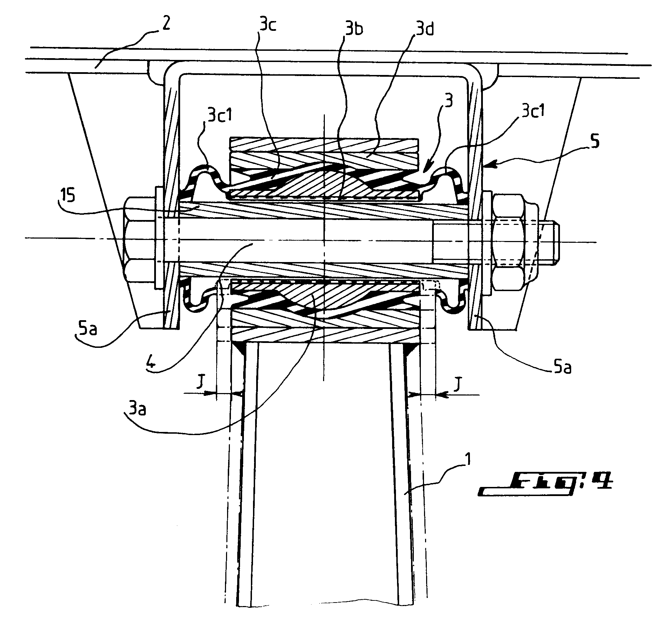

Pour cela, les articulations élastiques 3 reliant les extrémités avant des bras tirés 1 à la caisse 2 du véhicule sont radialement rigides et présentent une très grande souplesse en direction axiale parallèle à l'axe X-X' des roues arrière. Ainsi, chaque articulation élastique 3, logée dans la partie formant chape 5 de support de l'axe 4, est du type à rotule, dont la partie sphérique 3a peut coulisser axialement, par l'intermédiaire d'un palier anti-friction 3b, sur un manchon 15 coaxial à l'axe 4 et fixé entre les ailes 5a de la chape 5 par le boulon formant l'axe 4. Un bloc élastique 3c, de préférence en élastomère, présentant une rigidité radiale élevée et une très grande souplesse en direction axiale, est fixé entre la partie sphérique 3a de la rotule et la cage de rotule 3d solidaire de l'extrémité avant correspondante du bras tiré 1. Le bloc élastique 3c à ses deux extrémités opposées 3c1, en dehors de l'articulation à rotule, venant en appui respectivement contre les deux faces internes des deux ailes 5a de la chape 5. Ces extrémités ont chacune la forme d'un pli élastique bombé ou convexe pouvant ainsi se déformer élastiquement suivant l'axe 4. Chaque articulation élastique 3 permet ainsi au bras tiré associé 1 de se déplacer suivant l'axe X-X' d'une valeur J, vers la droite ou vers la gauche par rapport à la figure 4 par glissement sur le manchon 15 et permet donc le mouvement angulaire de roulis de la caisse 2 du véhicule par rapport à l'ensemble du train arrière. De préférence, chaque articulation élastique 3 permet un coulissement ou déplacement du bras tiré correspondant sensiblement égal à la flèche maximale F associée au débattement de la barre Panhard 12 en relation avec le débattement de chaque roue. Si chaque articulation 3 était rigide en direction axiale suivant l'axe X-X', il en résulterait un déplacement latéral important de chaque roue par rapport à l'axe de la caisse 2 plus une variation de pince de la roue nuisibles à la tenue de route du véhicule.

Le train arrière conforme à l'invention se caractérise ainsi par un ensemble très simple, se fixant directement sur la caisse du véhicule, a un nombre de pièces très réduit et, suivant son dimensionnement, il peut être utilisé sur des véhicules de bas ou haut de gamme. De plus, la disposition judicieuse des éléments constituant le train arrière assure à celui-ci un très bon guidage axial et latéral des roues arrière tout en conservant de bonnes qualités de supension et de tenue en devers.

## Revendications

1. Train arrière de véhicule automobile, du type comprenant deux bras tirés (1) dont chaque extrémité avant est montée pivotante par rapport à la caisse (2) du véhicule autour d'un axe (4) parallèle à l'axe (X-X') des roues arrière (R) ; une traverse (6) déformable aux extrémités de laquelle sont montées pivotantes les roues arrière (R) et solidaire des extrémités arrière des deux bras tirés (1) ; et, reliant la traverse à la caisse (2) du véhicule, deux ressorts hélicoïdaux (8) en appui sur des coupelles inférieures (9) et des coupelles supérieures (10) solidaires de la caisse (2) et deux amortisseurs (11) montés articulés à la traverse (6) et à la caisse (2) ; les extrémités avant des deux bras tirés (1) étant reliées à la caisse (2) du véhicule par des articulations élastiques (3) radialement rigides et présentant une très grande souplesse en direction axiale parallèle à l'axe (X-X') des roues arière (R) pour permettre un libre déplacement axial des extrémités avant des bras tirés (1), caractérisé en ce qu'il comprend de plus, pour son guidage latéral, une barre dite Panhard (12) reliée de façon articulée à ses deux extrémités respectivement à la caisse (2) du véhicule et à l'un des deux bras tirés (1) et en ce que les articulations élastiques (3) des bras tirés (1) permettent un coulissement sensiblement égal à la flèche maximale (F) associée au débattement de la barre Panhard (12) en relation avec le débattement de chaque roue (R).

2. Train arrière selon la revendication 1, caractérisé en ce que chaque articulation élastique (3) précitée comprend une rotule, dont la partie sphérique (3a) peut coulisser axialement sur l'axe de pivotement correspondant (4) par l'intermédiaire d'un palier anti-friction (3b) ; un bloc élastique (3c), de préférence en élastomère, fixé entre la partie sphérique (3a) et la cage de rotule (3d) qui est solidaire de l'extrémité avant correspondante du bras tiré (1), ladite articulation étant compatible avec le roulis de la caisse (2) du véhicule.

3. Train arrière selon la revendication 1 ou 2, caractérisé en ce que chaque articulation élastique (3) précitée est logée dans une partie formant chape (5) de support de l'axe de pivotement (4) du bras tiré correspondant (1) et en ce que le bloc élastique (3c) précité a ses deux extrémités opposées (3c1) en appui respectivement contre les deux faces internes des deux ailes (5c) de la partie formant chape (5).

4. Train arrière selon la revendication 1, caractérisé en ce que la barre Panhard (12) est disposée sensiblement parallèlement à l'axe (X-X') des roues arrière (R) approximativement dans le même plan horizontal contenant l'axe (X-X') et est à mi-distance entre l'axe des roues et les axes de pivotement des bras tirés (1).

5. Train arrière selon l'une des revendications précédentes, caractérisé en ce que la traverse (6) comprend une partie centrale (6a) à section transversale en Y, de grande flexibilité en torsion et disposée parallèlement à l'axe des roues arrière approximativement dans le même plan horizontal contenant ce dernier.

6. Train arrière selon la revendication 5, caractérisé en ce que la partie centrale (6a) de la traverse (6) est située en arrière de la barre Panhard (12).

7. Train arrière selon l'une des revendications précédentes, caractérisé en ce que les extrémités de la traverse (6) reliant la partie centrale (6a) aux fusées (7) des roues arrière (R) comprennent deux parties tubulaires (6b) rigides en torsion et en flexion.

8. Train arrière selon l'une des revendications précédentes, caractérisé en ce que les coupelles inférieures (9) précitées sont solidaires de la traverse (6).

## Patentansprüche

1. Kraftfahrzeugshinterradsatz, derjenigen Gattung mit zwei gezogenen Armen (1), deren jedes Vorderende gegenüber dem Kasten (2) des Fahrzeugs um einen zur Achse (X-X') der Hinterräder (R) parallelen Bolzen (4) herum schwenkbar angeordnet ist ; einem mit den Hinterenden der beiden gezogenen Armen (1) fest verbundenen, verformbaren Querträger (6) an dessen Enden die Hinterräder (R) schwenkbar angeordnet sind ; und zwei den Querträger mit dem Kasten (2) des Fahrzeugs verbindenden, sich an mit dem Kasten (2) fest verbundenen unteren Tellern (9) und oberen Tellern (10) abstützenden Schraubenfedern (8), und zwei an dem Querträger (6) und an dem Kasten (2) angelenkten Stossdämpfern (11) ; wobei die Vorderenden der beiden gezogenen Arme (1) mit dem Kasten (2) des Fahrzeugs durch radial steife und eine sehr grosse Nachgiebigkeit in zur Achse (X-X') der Hinterräder (R) parallelen Axialrichtung aufweisende elastische Gelenke (3) verbunden sind, um eine freie Axialverschiebung der Vorderenden der gezogenen Arme (1) zur gestatten, dadurch gekennzeichnet, dass er ausserdem, für seine Seitenführung, eine mit seinen beiden Enden jeweils mit dem Kasten (2) des Fahrzeugs und mit einem der beiden gezogenen Arme (1) verbundene sogenannte Panhard Stange (12) aufweist und dass die elastischen Gelenke (3) der gezogenen Arme (1) ein, der, dem Ausschlag der Panhard Stange (12) in Zusammenhang mit dem Ausschlag jedes Rades (R) zugeordneten grössten Durchbiegung (F) etwa gleiches Gleiten ermöglicht.

2. Hinterradsatz nach Anspruch 1, dadurch gekennzeichnet, dass jedes vorgenannte elastische Gelenk (3) eine Gelenkkugel, deren spherischer Teil (3a) auf dem entsprechenden Schwenkbolzen (4) über ein Antifriktionslager (3b) axial gleitbar ist ; einen zwischen dem spherischen Teil (3a) und dem Gelenkkugelkäfig (3d) befestigten elastischen Block (3c) umfasst, welcher Käfig mit dem entsprechenden Vorderende des gezogenen Armes (1) fest verbunden ist, wobei das besagte Gelenk mit der Wankbewegung des Kastens (2) des Fahrzeugs kompatibel ist.

3. Hinterradsatz nach Anspruch 1 oder 2, dadurch gekennzeichnet, dass jedes vorgenannte elastische Gelenk (3) in einem, einem Bügel (5) zur Halterung des Schwenkbolzens (4) des entsprechenden gezogenen Armes (1) bildenden Teil untergebracht ist und dass der vorgenannte elastiche Block (3c) sich mit seinem beiden entgegengesetzten Enden (3c1) jeweils an den beiden Innenflächen der beiden Schenkel (5c) des bügelartigen Teiles (5) abstützt.

4. Hinterradsatz nach Anspruch 1, dadurch gekennzeichnet, dass die Panhard stange (12) etwa parallel zur Achse (X-X') der Hinterräder (R) ungefähr in derselben die Achse (X-X') enthaltenden waagerechten Ebene angeordnet ist und sich auf halbem Wege zwischen der Achse der Räder und den Schwenkbolzen der gezogenen Arme (1) befindet.

5. Hinterradsatz nach einem der vorangehenden Ansprüche, dadurch gekennzeichent, dass der Querträger (6) einen parallel zur Achse der Hinterräder ungefähr in derselben diese letztere enthaltenden waagerechten Ebene angeordneten Mittelteil (6a) Y-förmigen Querschnitts und grösser Drallnachgiebigkeit aufweist.

6. Hinterradsatz nach Anspruch 5, dadurch gekennzeichnet, dass der Mittelteil (6a) des Querträgers (6) hinter der Panhard Stange (12) gelegen ist.

7. Hinterradsatz nach einem der vorangehenden Ansprüche, dadurch gekennzeichnet, dass die den Mittelteil (6a) mit den Achszapfen (7) der Hinterräder (R) verbindenden Enden des Querträgers (6) zwei drall-und biegesteife rohrförmige Teile (6b) aufweisen.

8. Hinterradsatz nach einem vorangehenden Ansprüche, dadurch gekennzeichnet, dass die vorgenannten unteren Teller (9) mit dem Querträger (6) fest verbunden sind.

## Claims

1. Rear axle assembly for an automotive vehicle, of the type comprising two dragged arms (1) each front end of which is pivotally mounted with respect to the body (2) of the vehicle about a pin (4) parallel to the axis (X-X') of the rear wheels (R); a deformable cross beam (6) at the ends of which are pivotally mounted the back wheels (R) and made fast to the rear ends of both dragged arms (1); and, connecting the cross beam to the body (2) of the vehicle, two helical springs (8) bearing upon lower cups (9) and upper cups (10) made fast to the body (2) and two dampers (11) pivotally mounted to the cross beam (6) and to the body (2); the front ends of both dragged arms (1) being connected to the body (2) of the vehicle by radially rigid elastic articulations (3) exhibiting a very great yieldingness in the axial direction parallel to the axis (X-X') of the rear wheels (R) to allow a free axial displacement of the front ends of the dragged arms (1), characterized in that it moreover comprises for its lateral guiding a so-called Panhard bar (12) pivotally connected at its two ends to the body (2) of the vehicle and to one of the two dragged arms (1), respectively, and in that the elastic articulations (3) of the dragged arms (1) permit a sliding substantially equal to the maximum deflection (F) associated with the motion amplitude of the Panhard bar (12) in relation to the motion amplitude of each wheel (R).

2. Back axle assembly according to claim 1, characterized in that each aforesaid elastic articulation (3) comprises a swivel joint ball the spherical portion (3a) of which may axially slide on the corresponding pivot pin (4) through the medium of an anti-friction bearing (3b); an elastic block (3c) preferably of elastomere fastened between the spherical portion (3a) and the swivel joint ball cage (3d) which is made fast to the corresponding front end of the dragged arm (1), the said articulation being compatible with the rolling of the body (2) of the vehicle.

3. Back axle assembly according to claim 1 or 2, characterized in that each aforesaid elastic articulation (3) is accommodated in a yoke-shaped portion (5) supporting the pivot pin (4) of the corresponding dragged arm (1) and in that the aforesaid elastic block (3c) has its two opposite ends (3c1) bearing against both internal faces of the two legs (5a), respectively, of the yoke-shaped portion (5)

4. Back axle assembly according to claim 1, characterized in that the Panhard bar (12) is disposed in substantially parallel relation to the axis (X-X') of the rear wheels (R) approximately in the same horizontal plane containing axis (X-X') and is half-way between the axis of the wheels and the pivot pins of the dragged arms (1)

5. Back axel assembly according to one of the foregoing claims, characterized in that the cross beam (6) comprises a central portion (6a) with a Y-shaped cross section, with a great flexiblity in torsion and disposed in parallel relation to the axis of the rear wheels approximately in the same horizontal plane containing the latter.

6. Back axle assembly according to claim 5, characterized in that the central portion (6a) of the cross beam (6) is located rearwards of the Panhard bar (12).

7. Back axle assembly according to one of the foregoing claims, characterized in that the ends of the cross beam (6) connecting the central portion (6a) to the axle stubs (7) of the rear wheels (R) comprise two tubular portions (6b) rigid in torsion and in bending.

8. Back axle assembly according to one of the foregoing claims, characterized in that the aforesaid lower cups (9) are made fast to the cross beam (6).
